# EUROPEAN PATENT APPLICATION

(11) **EP 4 803 789 A1**
(43) Date of publication of application: **09.09.2026**
(21) Application number: 24876638.8
(22) Date of filing: 11.10.2024
(51) Int. Cl.: F16K 11/08, B60H 1/00

(54) **FLUID MANAGEMENT VALVE AND THERMAL MANAGEMENT SYSTEM**

(30) Priority: 13.10.2023 CN 202311335953
(71) Applicant: Valeo Electrification, 95892 Cergy Pontoise (FR)
(72) Inventor: GAO, Yang, Jingzhou, Hubei 434000 (CN); WAN, Xuanchen, Jingzhou, Hubei 434000 (CN); YAO, Ze, Jingzhou, Hubei 434000 (CN)
(74) Representative: Valeo Powertrain Systems
(86) International application number: PCT/CN2024/124135
(87) International publication number: WO 2025/077828

(57) **Abstract**

A fluid management valve, comprising: a valve body having a valve port and a main opening; a valve core provided with a main flow channel, the valve core being located in the valve body and having an open position and a closed position relative to the valve body, wherein when the valve core is in the open position, the main flow channel allows communication between the valve port and the main opening, and when the valve core is in the closed position, the valve port and the main opening are separated by the valve core. **In** the described design, the fluid management valve can be switched between different working modes, and the main opening has a throttling function. Such a design is able to replace complex schemes in the prior art involving a plurality of stop valves and/or a three-way valve. The present design allows for a simplified structure, convenient assembly, reduced cost, easy control, and increased product integration.

## Description

### Technical Field

The present disclosure relates to a fluid management valve and a thermal management system comprising the fluid management valve.

### Background Art

The thermal management system of a vehicle usually includes a refrigerant circuit and a coolant circuit, in which the refrigerant circuit is mainly formed by elements such as compressors, heat exchangers, throttling devices, etc., connected via pipelines. To enable switching and control between multiple thermal management modes (e.g. refrigeration, heat pumps, etc.), multiple shut-off valves and/or three-way valves are often required to be disposed on the refrigerant circuit. However, such a system configuration not only results in high cost, numerous parts, difficult assembly, and heavy weight for the thermal management system of the vehicle, but also in a more complex control strategy.

Therefore, how to design a fluid management valve to replace multiple shut-off valves and/or three-way valves, so as to simplify the thermal management system of the vehicle, reduce the overall system cost, make it easier to assemble and control, and make it smaller and lighter, has become an urgent problem to be solved.

### Summary of the Invention

An objective of the present disclosure is to provide a fluid management valve, wherein a main opening and a valve port are provided on a valve body; a spool is provided with a main flow channel including a main body section and a throttling section; by rotating the spool, the main opening is allowed to correspond to the main body section or the throttling section of the main flow channel, and selectively communicate with the valve port, thereby enabling the fluid management valve to switch between different operating modes and causing the main opening to have a throttling function. Specifically, the main opening can be adjusted between fully open, throttling and closed states. This design can not only replace the complex structure of multiple shut-off valves and/or three-way valves in the prior art, resulting in simple assembly and low cost, but also make it easy to control, simplify the pipeline structure, and improve product integration.

The present disclosure provides a fluid management valve, comprising: a valve body, the valve body having a valve port and a main opening; and a spool, the spool having a main flow channel; wherein the spool is located within the valve body and has a communicated position and a closed position relative to the valve body; when the spool is located in the communicated position, the main flow channel communicates the valve port with the main opening; and when the spool is located in the closed position, the valve port and the main opening are separated by the spool.

In the present disclosure, with the above design of the fluid management valve, switching between different operating modes can be realized, and the main opening can selectively communicate with the valve port. This design is simple in structure, easy to assemble, low in cost, easy to control, and can simplify the piping structure and improve product integration.

In one or more embodiments, the main flow channel has a main body section and a throttling section; the communicated position comprises a fully open position and a throttling position; when the spool is located in the fully open position, the main body section directly communicates the main opening with the valve port; and when the spool is located in the throttling position, the throttling section is located between the main opening and the main body section so that the main body section is in communication with the main opening via the throttling section.

In the present disclosure, with the above design of the main flow channel of the spool, the throttling function of the main opening can be achieved, and the main opening can be adjusted between fully open, throttling and closed states.

In one or more embodiments, the valve port comprises a first valve port and a second valve port; the fully open position comprises a first fully open position and a second fully open position; when the spool is located in the first fully open position, the main opening is in communication with the first valve port through the main body section; and when the spool is located in the second fully open position, the main opening is in communication with the second valve port through the main body section.

In one or more embodiments, the spool further has a central flow channel; the valve port further comprises a third valve port and a fourth valve port; when the spool is located in the first fully open position, the third valve port is in communication with the fourth valve port through the central flow channel; when the spool is located in the closed position, the third valve port is in communication with the first valve port through the central flow channel; when the spool is located in the second fully open position, the third valve port is in communication with the first valve port through the central flow channel; and when the spool is located in the throttling position, the third valve port is in communication with the first valve port through the central flow channel.

In one or more embodiments, the central flow channel is defined by an arc-shaped edge portion, a first straight edge portion and a second straight edge portion into a sector shape; wherein the third valve port is located at the intersection of the first straight edge portion and the second straight edge portion; and during the movement of the spool relative to the valve body, the fourth valve port and the first valve port move along the arc-shaped edge portion relative to the spool.

In the present disclosure, with the above arrangement of the central flow channel, the third valve port of the valve body is made to be kept in constant communication with the central flow channel.

In one or more embodiments, the spool further has an edge flow channel; the valve port further comprises a fifth valve port; when the spool is located in the first fully open position, the fifth valve port is in communication with the second valve port through the edge flow channel; when the spool is located in the closed position, the fifth valve port is in communication with the second valve port through the edge flow channel; when the spool is located in the second fully open position, the fifth valve port is in communication with the fourth valve port through the edge flow channel; and when the spool is located in the throttling position, the fifth valve port is in communication with the fourth valve port through the edge flow channel.

In one or more embodiments, the edge flow channel is an arc-shaped cavity extending along a circumferential direction of the fluid management valve.

In one or more embodiments, the valve body has a top wall, a bottom wall and a side wall located between the top wall and the bottom wall, the valve port is disposed at the bottom wall and the main opening is disposed at the side wall.

In one or more embodiments, the central flow channel and the edge flow channel are open on a bottom wall of the spool.

In one or more embodiments, the main flow channel has a first flow channel opening formed on a bottom wall of the spool; the main flow channel has a second flow channel opening formed on a side wall of the spool; wherein the second flow channel opening comprises a first opening region for defining the main body section and a second opening region for defining the throttling section; when the spool is located in the fully open position, the first opening region at least partially overlaps with the main opening; and when the spool is located in the throttling position, the second opening region at least partially overlaps with the main opening.

In the present disclosure, with the above design of the flow channel on the spool and the valve port and main opening on the valve body, the spool can be rotated between multiple positions, so that the four operating modes of the fluid management valve are switched, making it easy to control and improving the integration of the product.

In one or more embodiments, the fluid management valve further comprises a sealing member disposed between the valve body and the spool.

In the present disclosure, by disposing the sealing member between the valve body and the spool, the problem of internal leakage caused by fluid flowing between the spool and the valve body can be effectively avoided.

In one or more embodiments, the throttling section is a groove extending from a junction with the main body section in a direction away from the main body section.

In one or more embodiments, the groove gradually narrows in the direction away from the main body section.

In one or more embodiments, the fluid management valve further comprises an actuator connected to the spool to drive the spool to rotate between the communicated position and the closed position.

The present disclosure further provides a thermal management system of a vehicle, the thermal management system comprising the aforementioned fluid management valve.

The thermal management system of the present disclosure can simplify the system structure and control strategy and reduce the overall system cost by comprising the fluid management valve with the aforementioned structure.

### Brief Description of the Drawings

Fig. 1 shows a perspective view of a fluid management valve according to an embodiment of the present disclosure;
Fig. 2 shows a perspective view of the fluid management valve according to the embodiment of the present disclosure when viewed from another angle of view, in which the arrangement of a main opening and first to fifth valve ports is shown;
Fig. 3 shows a perspective view of a valve body according to an embodiment of the present disclosure;
Fig. 4 shows a perspective view of a spool according to an embodiment of the present disclosure;
Fig. 5 shows a perspective view of the spool according to the embodiment of the present disclosure when viewed from another angle of view;
Fig. 6 shows a cross-sectional view of a fluid management valve according to an embodiment of the present disclosure when it is in a first operating mode, in which a spool is in a first fully open position;
Fig. 7 shows a cross-sectional view of the fluid management valve according to the embodiment of the present disclosure when it is in a second operating mode, in which the spool is in a closed position;
Fig. 8 shows a cross-sectional view of the fluid management valve according to the embodiment of the present disclosure when it is in a third operating mode, in which the spool is in a second fully open position;
Fig. 9 shows a cross-sectional view of the fluid management valve according to the embodiment of the present disclosure when it is in a fourth operating mode, in which the spool is located in a throttling position;
Fig. 10 shows a schematic view of connections of a thermal management system according to an embodiment of the present disclosure;
Fig. 11 shows a schematic view of connections of a thermal management system according to another embodiment of the present disclosure;
Fig. 12 shows a schematic view of communication of a thermal management system according to another embodiment of the present disclosure when operating in an AC mode;
Fig. 13 shows a schematic view of communication of a thermal management system according to another embodiment of the present disclosure when operating in a self-circulation mode;
Fig. 14 shows a schematic view of communication of a thermal management system according to another embodiment of the present disclosure when operating in a dehumidification mode;
Fig. 15 shows a schematic view of communication of a thermal management system according to another embodiment of the present disclosure when operating in a heat pump mode;
Fig. 16 shows a schematic view of connections of a thermal management system according to another embodiment of the present disclosure; and
Fig. 17 shows a schematic view of communication of a thermal management system according to another embodiment of the present disclosure when operating in a triangular circulation mode.

### Detailed Description of the Embodiments

Embodiments of the present disclosure will be described below through specific examples, and those skilled in the art can readily understand other advantages and effects of the present disclosure from the content disclosed in this specification.

It should be noted that the structures, proportions, sizes, etc., shown in the accompanying drawings of this specification are solely for illustration in combination with the contents disclosed herein so that those skilled in the art may understand and read them, and that they are not intended to limit the conditions under which the present disclosure can be implemented, and therefore, they have no substantive technical significance. Any modification of structure, changes in proportional relationships or adjustments to the size, provided that the effect produced by the present disclosure and the purpose attainable thereby are not affected, should still fall within the scope that can be covered by the technical contents disclosed in the present disclosure. In addition, terms such as "upper" and "one" cited in this specification are also used solely for descriptive clarity and are not to limit the range in which the present disclosure can be implemented; any change or adjustment in their relative relationships, without substantive alteration of the technical contents, should likewise be regarded as falling within the scope in which the present disclosure can be implemented.

To provide a clearer understanding of the present disclosure, the embodiments of the present disclosure will be specifically described below with reference to the drawings.

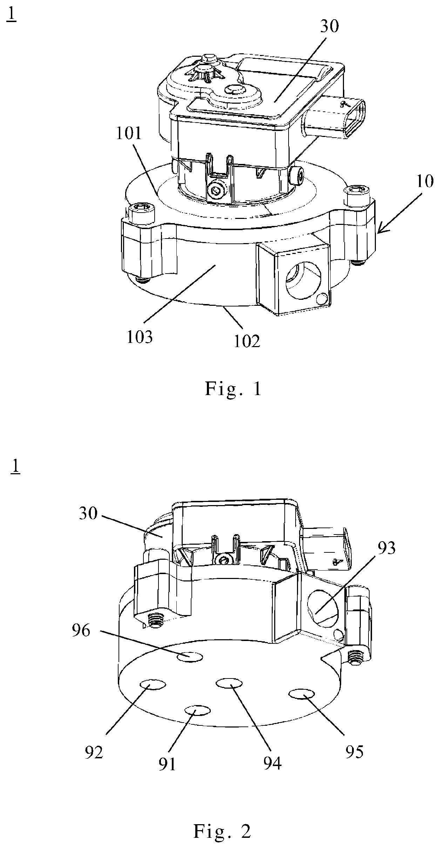

The present disclosure provides a fluid management valve 1. Referring to Figs. 1 to 4, the fluid management valve 1 includes a valve body 10 having a valve port and a main opening 93, and a spool 20 which is located inside the valve body 10 and can be rotated between multiple positions relative to the valve body 10.

The valve body 10 is substantially cylindrical, and has a top wall 101, a bottom wall 102, and a side wall 103 located between the top wall 101 and the bottom wall 102. The valve port of the valve body 10 is disposed at the bottom wall 102, and the main opening 93 is disposed at the side wall 103, thereby allowing the valve port to directly dock and communicate with a flow channel on a flow channel plate (not shown), simplifying the pipeline layout and optimizing the system structure.

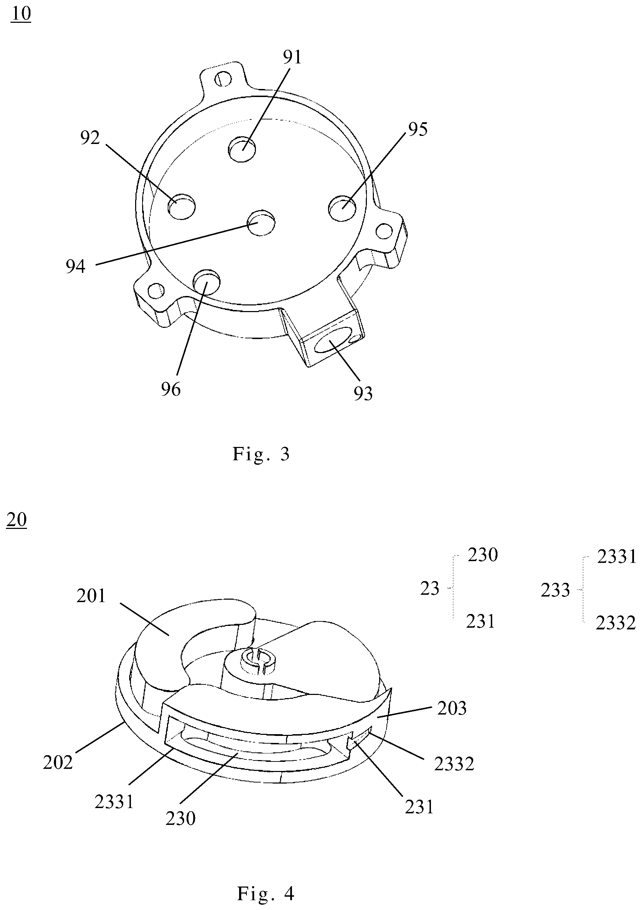

In this embodiment, the valve body 10 may have five valve ports, which are a first valve port 95, a second valve port 96, a third valve port 94, a fourth valve port 91, and a fifth valve port 92, respectively. As shown in Figs. 2 and 3, at least two or at least one of these valve ports may be in communication with the main opening 93 through a flow channel of the spool 20, thereby forming a fluid passage. The valve body 10 may be provided with an opening at the top wall 101 for inserting the spool 20, and the spool 20 may be fixed in the valve body 10 by a flange mounted on the top wall 101.

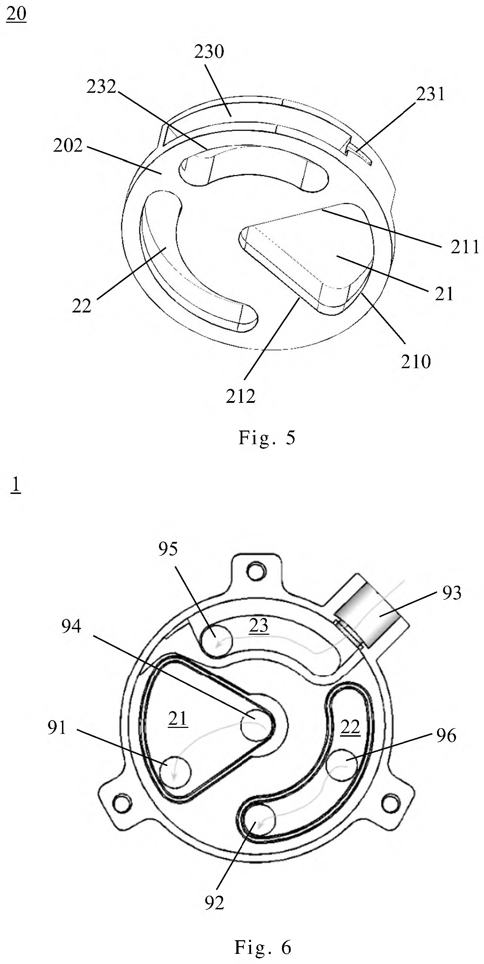

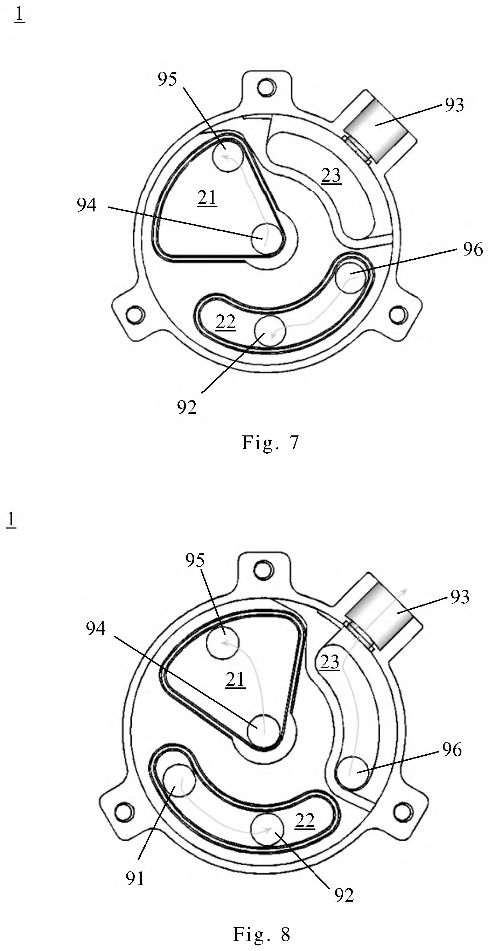

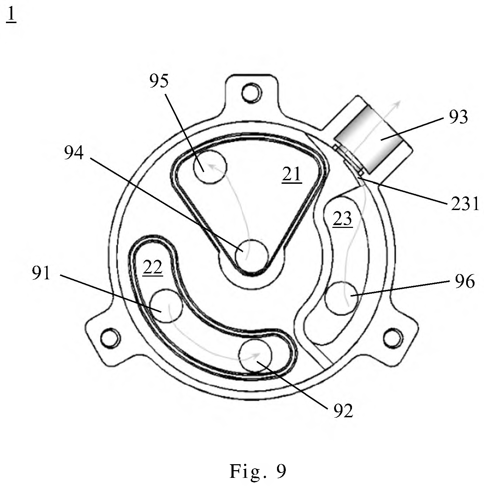

Referring to Figs. 4 and 5, the spool 20 may be substantially cylindrical and also have a top wall 201, a bottom wall 202 and a circumferential side wall 203 between the top wall 201 and the bottom wall 202, enabling the spool to rotate relative to the valve body 10. In this embodiment, the spool 20 may be rotated between a communicated position (i.e., a position where the valve port and the main opening 93 may be communicated by the flow channel of the spool 20) and a closed position (i.e., a position where the valve port and the main opening 93 are separated by the spool 20, as shown in Fig. 7), wherein the communicated position includes a fully open position (when the main opening 93 is in a fully open state) and a throttling position (when the main opening 93 is in a throttling state, as shown in Fig. 9), and the fully open position includes a first fully open position (as shown in Fig. 6) and a second fully open position (as shown in Fig. 8). The spool 20 further includes a plurality of flow channels, allowing at least two valve ports or at least one valve port to be in communication with the main opening 93 when the spool 20 is in each of the above positions.

With continued reference to Figs. 4 and 5, the spool 20 includes a main flow channel 23. When the spool 20 is located in the communicated position (shown in Figs. 6 and 8), the main flow channel 23 is used to be in communication with the valve port and the main opening 93. Specifically, the main flow channel 23 includes a main body section 230 and a throttling section 231 which is disposed on a side of the main body section 230 in a circumferential direction, and has a first flow channel opening 232 that is open on the bottom wall 202 and a second flow channel opening 233 that is open on the side wall 203. The first flow channel opening 232 and the second flow channel opening 233 may overlap with the valve port and the main opening 93, respectively, enabling the two to be in communication. In more detail, the second flow channel opening 233 includes a first opening region 2331 for defining the main body section 230 and a second opening region 2332 for defining the throttling section 231. That is, the first opening region 2331 is an opening region of the main body section 230 on the side wall 203, the second opening region 2332 is an opening region of the throttling section 231 on the side wall 203, and the two opening regions 2331 and 2332 are connected to each other on the side wall.

In this embodiment, the main body section 230 of the main flow channel 23 may be substantially in the form of an arc-shaped cavity extending along a circumferential direction of the spool 20. The throttling section 231 is a groove that extends from a junction with the main body section 230 in a direction away from the main body section 230. Preferably, the groove may gradually change along the direction away from the main body section 230 (that is, along the direction away from the main body section 230, the size of the second opening region 2332 of the throttling section 231 in the direction of the central axis of the spool 20 gradually changes). For example, the groove gradually narrows, so that the spool 20 can precisely adjust the throttling flow corresponding to the main opening 93 of the throttling section 231 when it is in different positions. It should be noted that the maximum size of the second opening region 2332 in the direction of the central axis of the spool 20 is less than or equal to the size of the first opening region 2331 in the direction of the above central axis, so that the main opening 93 corresponding to the second opening region 2332 can have a throttling effect. Of course, the present disclosure is not limited to the above shape of the main flow channel 23, as long as it can be in communication with the valve port and the main opening 93, and the throttling section 231 of the main flow channel 23 can adjust the flow of the main opening 93.

With reference to Fig. 5, the spool 20 may further include a central flow channel 21. When the spool 20 is in the first fully open position (as shown in Fig. 6), the central flow channel 21 is used to communicate the third valve port 94 with the fourth valve port 91, and when the spool 20 is in the closed position (as shown in Fig. 7), the second fully open position (as shown in Fig. 8), and the throttling position (as shown in Fig. 9), the central flow channel 21 is used to communicate the third valve port 94 with the first valve port 95. The central flow channel 21 is open on the bottom wall 202 of the spool 20 to communicate with the above valve ports.

In this embodiment, the central flow channel 21 is substantially in the form of a sector-shaped cavity. When viewed from the bottom wall 202 of the spool 20, the central flow channel 21 is in the shape of a sector surrounded/defined by an arc-shaped edge portion 210, a first straight edge portion 211 and a second straight edge portion 212, wherein the third valve port 94 of the valve body 10 corresponds to the intersection of the first straight edge portion 211 and the second straight edge portion 212. During the rotation process of the spool 20, the third valve port 94 can be kept in constant communication with the central flow channel 21, and the fourth valve port 91 and the first valve port 95 move along the arc-shaped edge portion 210 relative to the spool 20, so that when the spool 20 is in different positions, the third valve port 94 can selectively communicate with the fourth valve port 91 or the first valve port 95.

With continued reference to Fig. 5, the spool 20 may further include an edge flow channel 22. When the spool 20 is in the first fully open position (shown in Fig. 6) and the closed position (shown in Fig. 7), the edge flow channel 22 is used to communicate the second valve port 96 with the fifth valve port 92; and when the spool is in the second fully open position (as shown in Fig. 8) and the throttling position (as shown in Fig. 9), the edge flow channel 22 is used to communicate the fourth valve port 91 with the fifth valve port 92. The edge flow channel 22 is open on the bottom wall 202 of the spool 20 to communicate with the above valve ports.

In this embodiment, the edge flow channel 22 may be substantially in the form of an arc-shaped cavity extending along the fluid management valve 1, in particular along a circumferential direction of the spool 20. Of course, the present disclosure is not limited to the specific structure of the above channels, as long as the spool 20 can communicate at least two valve ports or at least one valve port with the main opening 93 when it is in different positions.

Referring back to Fig. 1, the fluid management valve 1 further includes an actuator 30 to drive the spool 20 to rotate between different positions. In an embodiment, the actuator 30 may include a stepper motor to facilitate the control of the rotation angle of the spool 20. Specifically, a drive portion may be disposed on the top wall 201 of the spool 20, a flange fixed on the top wall 101 of the valve body 10 is provided with a through hole that exposes the drive portion, and an output shaft of the actuator 30 is fitted to the drive portion of the spool 20 via the through hole, so as to drive the spool 20 to rotate relative to the valve body 10.

In addition, the fluid management valve 1 of the present disclosure may further include a sealing member disposed between the valve body 10 and the spool 20. Specifically, the sealing member, for example, multiple sealing rings, may be disposed between each port of the valve body 10 and the spool 20 and between the main opening 93 and the spool 20, so as to effectively avoid the problem of internal leakage caused by fluid flowing between the spool 20 and the valve body 10. Of course, the sealing member of the present disclosure is not limited to the above structure, as long as the seal between the valve body 10 and the spool 20 can be achieved.

Four operating modes of the fluid management valve 1 will be specifically described below with reference to Figs. 4 to 9.

Fig. 6 shows a flow state of the fluid management valve 1 when the spool 20 is in the first fully open position, namely, a first operating mode of the fluid management valve 1. In addition, referring to Figs. 4, 5 and 6, when the spool 20 is in the first fully open position: the main opening 93 of the valve body 10 is in communication with the second flow channel opening 233 of the main flow channel 23 of the spool 20 (in particular, its first opening region 2331, making the main opening 93 be in a fully open state), and the first flow channel opening 232 of the main flow channel 23 is in communication with the first valve port 95. That is, the main opening 93 of the valve body 10 is in communication with the first valve port 95 via the main body section 230 of the main flow channel 23 of the spool 20, so that fluid can flow from the main opening 93 into the fluid management valve 1 and flow out from the first valve port 95, as shown by the arrow at the top of Fig. 6. The third valve port 94 and the fourth valve port 91 of the valve body 10 are both in communication with an opening of the central flow channel 21 of the spool 20, that is, the third valve port 94 is in communication with the fourth valve port 91 via the central flow channel 21 of the spool 20, so that fluid can flow from the third valve port 94 into the fluid management valve 1 and flow out from the fourth valve port 91, as shown by the arrow at the bottom left of Fig. 6. Meanwhile, the second valve port 96 and the fifth valve port 92 of the valve body 10 are both in communication with an opening of the edge flow channel 22 of the spool 20, that is, the second valve port 96 is in communication with the fifth valve port 92 via the edge flow channel 22, so that fluid can flow from the second valve port 96 into the fluid management valve 1 and flow out from the fifth valve port 92, as shown by the arrow at the bottom right of Fig. 6. As can be seen, when the spool 20 is in the first fully open position, the main opening 93 of the valve body 10 is in communication with the first valve port 95, and the main opening 93 is in the fully open state. The third valve port 94 is in communication with the fourth valve port 91, the second valve port 96 is in communication with the fifth valve port 92, and the fluid management valve 1 is in the first operating mode.

Fig. 7 shows a flow state of the fluid management valve 1 when the spool 20 is in the closed position, namely, a second operating mode of the fluid management valve 1. As shown in the figure, when the spool 20 is in the closed position: the first valve port 95 and the third valve port 94 of the valve body 10 are both in communication with the opening of the central flow channel 21 of the spool 20, that is, the third valve port 94 is in communication with the first valve port 95 via the central flow channel 21, so that fluid can flow from the third valve port 94 into the fluid management valve 1 and flow out from the first valve port 95, as shown by the arrow at the top of Fig. 7. Meanwhile, the second valve port 96 and the fifth valve port 92 of the valve body 10 are both in communication with the opening of the edge flow channel 22 of the spool 20, that is, the second valve port 96 is in communication with the fifth valve port 92 via the edge flow channel 22, so that fluid can flow from the second valve port 96 into the fluid management valve 1 and flow out from the fifth valve port 92, as shown by the arrow at the bottom of Fig. 7. In addition, the main flow channel 23 of the spool 10 is only in communication with the main opening 93 of the valve body 10, so that the main opening 93 is not in communication with the other valve ports (that is, the main opening 93 is in a closed state). As can be seen, when the spool 20 is in the closed position, the first valve port 95 of the valve body is in communication with the third valve port 94 and the second valve port 96 is in communication with the fifth valve port 92. The main opening 93 is in the closed state, and the fluid management valve 1 is in the second operating mode.

Fig. 8 shows a flow state of the fluid management valve 1 when the spool 20 is in the second fully open position, namely, a third operating mode of the fluid management valve 1. In addition, referring to Figs. 4, 5 and 8, when the spool 20 is in the second fully open position: the main opening 93 of the valve body 10 is in communication with the second flow channel opening 233 of the main flow channel 23 of the spool 20 (in particular, its first opening region 2331, making the main opening 93 be in a fully open state), and the first flow channel opening 232 of the main flow channel 23 is in communication with the second valve port 96. That is, the main opening 93 of the valve body 10 is in communication with the second valve port 96 via the main body section 230 of the main flow channel 23 of the spool 20, so that fluid can flow from the second valve port 96 into the fluid management valve 1 and flow out from the main opening 93, as shown by the arrow at the top right of Fig. 8. The third valve port 94 and the first valve port 95 of the valve body 10 are both in communication with the opening of the central flow channel 21 of the spool 20, that is, the third valve port 94 is in communication with the first valve port 95 via the central flow channel 21 of the spool 20, so that fluid can flow from the third valve port 94 into the fluid management valve 1 and flow out from the first valve port 95, as shown by the arrow at the top left of Fig. 8. Meanwhile, the fourth valve port 91 and the fifth valve port 92 of the valve body 10 are both in communication with the opening of the edge flow channel 22 of the spool 20, that is, the fourth valve port 91 is in communication with the fifth valve port 92 via the edge flow channel 22, so that fluid can flow from the fourth valve port 91 into the fluid management valve 1 and flow out from the fifth valve port 92, as shown by the arrow at the bottom of Fig. 8. As can be seen, when the spool 20 is in the second fully open position, the main opening 93 of the valve body 10 is in communication with the second valve port 96, and the main opening 93 is in the fully open state. The third valve port 94 is in communication with the first valve port 95, the fourth valve port 91 is in communication with the fifth valve port 92, and the fluid management valve 1 is in the third operating mode.

Fig. 9 shows a flow state of the fluid management valve 1 when the spool 20 is in the throttling position, namely, a fourth operating mode of the fluid management valve 1. In addition, referring to Figs. 4, 5 and 9, when the spool 20 is in the throttling position: the main opening 93 of the valve body 10 is in communication with the second flow channel opening 233 of the main flow channel 23 of the spool 20 (in particular, its second opening region 2332, making the main opening 93 be in a throttling state), and the first flow channel opening 232 of the main flow channel 23 is in communication with the second valve port 96. That is, the main opening 93 of the valve body 10 is in communication with the second valve port 96 via the throttling section 231 and the main body section 230 of the main flow channel 23 of the spool 20, so that fluid can flow from the second valve port 96 into the fluid management valve 1 and flow out from the main opening 93, as shown by the arrow at the top right of Fig. 8. The third valve port 94 and the first valve port 95 of the valve body 10 are both in communication with the opening of the central flow channel 21 of the spool 20, that is, the third valve port 94 is in communication with the first valve port 95 via the central flow channel 21 of the spool 20, so that fluid can flow from the third valve port 94 into the fluid management valve 1 and flow out from the first valve port 95, as shown by the arrow at the top left of Fig. 8. Meanwhile, the fourth valve port 91 and the fifth valve port 92 of the valve body 10 are both in communication with the opening of the edge flow channel 22 of the spool 20, that is, the fourth valve port 91 is in communication with the fifth valve port 92 via the edge flow channel 22, so that fluid can flow from the fourth valve port 91 into the fluid management valve 1 and flow out from the fifth valve port 92, as shown by the arrow at the bottom of Fig. 8. As can be seen, when the spool 20 is located in the throttling position, the second valve port 96 of the valve body 10 is in communication with the main opening 93, and the main opening 93 is in the throttling state. The third valve port 94 is in communication with the first valve port 95, the fourth valve port 91 is in communication with the fifth valve port 92, and the fluid management valve 1 is in the fourth operating mode.

It should be noted that when the main opening 93 is in the throttling state, the fluid management valve 1 is collectively referred to as being in the fourth operating mode; of course, the fourth operating mode of the fluid management valve 1 is not limited to the above spool position shown in Fig. 9. For example, when the spool 20 is rotated to the second opening region 2332 of the second flow channel opening 233 of the main flow channel 23 to partially overlap with the main opening 93, the main opening 93 is in the throttling state, and the fluid management valve 1 is in the fourth operating mode, with only the throttling flow of the second valve port 93 being different. In this embodiment, the second valve port 93 may be adjusted from 100% (fully open) to 0% (closed).

It can be seen that the fluid management valve 1 in the present disclosure can be switched between the different operating modes of the fluid management valve 1 by changing the position of the spool 20 (e.g. by rotating the spool 20), and the main opening 93 can be adjusted between fully open, throttling and closed states. It is easy to control and can replace the combination of multiple three-way valves and/or shut-off valves in the prior art. It is simple to assemble, and can simplify the pipeline structure, improve integration, and reduce the space occupied.

Although the above embodiment of the present disclosure is described with the valve body 10 having five valve ports and one main opening 93, the main opening 93 having a throttling function, the spool 20 having three flow channels, and the fluid management valve 1 having four operating modes, the present disclosure is not limited thereto. For example, the valve body 10 may have one, two, three, four or more valve ports fitted with one main opening 93, the valve ports may also be configured to have a throttling function as needed, and the spool 20 may be in other positions. There may also be other flow channels, so that the fluid management valve 1 is in other operating modes (e.g., a fifth operating mode: the main opening 93 being in communication with the third valve port 94; the fourth valve port 91 being in communication with the fifth valve port 92; and each of the first valve port 95 and the second valve port 96 being not in communication with other valve ports; or a sixth operating mode: only the third valve port 94 being in communication with the fifth valve port 92), as long as the spool 20 can communicate at least two valve ports or at least one valve port with the main opening 93 when it is in different positions to enable the fluid management valve 1 to switch between the different operating modes.

In addition, the arrows indicating the flow channels in Figs. 6 to 9 of the present disclosure are not intended to restrict the flow direction of the fluid, but are only for illustrative purposes. For example, the fluid may also flow in the opposite direction of the arrow, as long as the region through which the arrow passes is communicated.

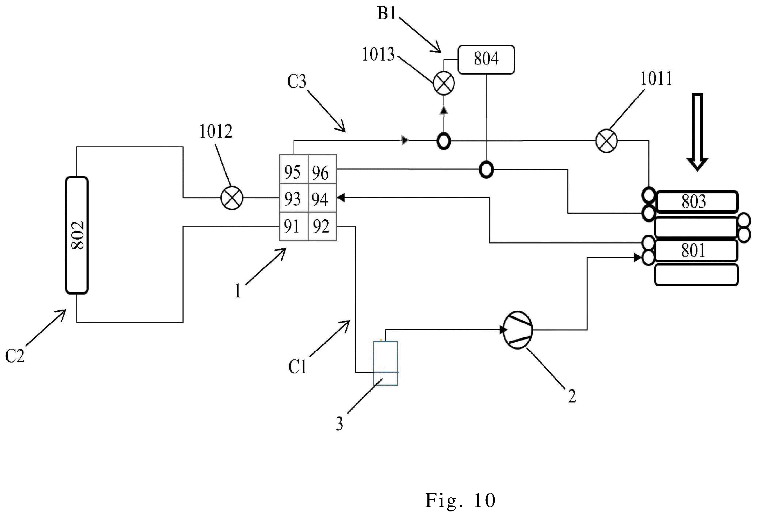

The present disclosure further provides a thermal management system including the fluid management valve described above, and various embodiments of the thermal management system will be specifically described below with reference to Figs. 10 to 17. It should be noted that the thermal management system in each embodiment of the present disclosure only shows a refrigerant circuit (e.g., a circuit through which a Freon refrigerant flows), with the coolant circuit being omitted. Furthermore, the fluid management valve in the thermal management system of the present disclosure only illustrates the valve ports and main opening included therein, but does not show the specific positional relationship between the valve ports and the main opening.

Referring to Fig. 10, a schematic view of connections of a thermal management system according to an embodiment of the present disclosure is shown. As shown in the figure, the thermal management system includes the fluid management valve 1 described above, a first fluid circuit C1, a second fluid circuit C2 and a third fluid circuit C3.

The first fluid circuit C1 is sequentially provided with a compressor 2 and a first heat exchanger 801 along a flow direction of fluid, wherein the upstream of the compressor 2 is in communication with the fifth valve port 92 of the fluid management valve 1, and the downstream of the first heat exchanger 801 is in communication with the third valve port 94 of the fluid management valve 1, that is, both ends of the first fluid circuit C1 are in communication with the fifth valve port 92 and the third valve port 94 of the fluid management valve 1, respectively. Specifically, a suction port of the compressor 2 is in communication with the fifth valve port 92, a discharge hole of the compressor 2 is in communication with an inlet port of the first heat exchanger 801, and an outlet port of the first heat exchanger 81 is in communication with the third valve port 94. In this embodiment, the first heat exchanger 801 may be a built-in condenser that can convert a compressed gaseous refrigerant into a liquid state and dissipate the heat released into the surrounding environment, so as to produce a heating effect.

In an embodiment, the first fluid circuit C1 may further be provided with a gas-liquid separator 3, which is disposed between the fifth valve port 92 and the suction port of the compressor 2, and used to store the liquid refrigerant that has not been evaporated and discharge the gaseous refrigerant, so as to prevent the liquid refrigerant from flowing into the compressor.

The second fluid circuit C2 is provided with a second heat exchanger 802, wherein the pipelines on both sides of the second heat exchanger 802 are in communication with the fourth valve port 91 and the main opening 93 of the fluid management valve 1, respectively. The second flow channel circuit C2 may also be provided with a second throttling device 1012, and the second throttling device 1012 is located between the second heat exchanger 802 and the main opening 93. In this embodiment, the second heat exchanger 802 may be an evaporative condenser, and the flow direction of the refrigerant in the second fluid circuit C2 may be switched according to the different modes of the thermal management system. The second throttling device 1012 may be an expansion ball valve, which has three states: fully open, throttling, and closed. Specifically, when the second throttling device 1012 is in the fully open state, the refrigerant is not throttled or depressurized when passing through the second throttling device 1012, that is, the refrigerant passes through the second throttling device 1012 in a non-throttling state. When the second throttling device 1012 is located in the throttling state, the refrigerant is throttled and depressurized when passing through the second throttling device 1012. When the second throttling device 1012 is in the closed state, the refrigerant cannot pass through the second throttling device 1012.

The third fluid circuit C3 is sequentially provided with a first throttling device 1011 and a third heat exchanger 803 along the flow direction of fluid, wherein the upstream of the first throttling device 1011 is in communication with the first valve port 95 of the fluid management valve 1, and the downstream of the third heat exchanger 803 is in communication with the second valve port 96 of the fluid management valve 1. That is, both ends of the third fluid circuit C3 are in communication with the first valve port 95 and the second valve port 96 of the fluid management valve 1, respectively. In this embodiment, the third heat exchanger 803 may be an evaporator to convert the liquid refrigerant into a gaseous state and absorb heat from the surrounding environment, so as to produce a cooling effect. Moreover, along the flow direction of air (as shown by the hollow arrow in the figure), the third heat exchanger 803 is located upstream of the first heat exchanger 801. The first throttling device 1011 may also be an expansion ball valve, which has three states: fully open, throttling, and closed. Specifically, when the first throttling device 1011 is in the fully open state, the refrigerant is not throttled or depressurized when passing through the first throttling device 1011, that is, the refrigerant passes through the first throttling device 1011 in a non-throttling state. When the first throttling device 1011 is in the throttling state, the refrigerant is throttled and depressurized when passing through the first throttling device 1011. When the first throttling device 1011 is in the closed state, the refrigerant cannot pass through the first throttling device 1011.

With continued reference to Fig. 10, the thermal management system may further include a first branch B1. The first branch B1 is sequentially provided with a third throttling device 1013 and a fourth heat exchanger 804 along the flow direction of fluid, and the first branch B1 is connected in parallel with the third circuit C3. Specifically, the upstream of the third throttle unit 1013 is in communication with a pipeline between the first valve port 95 and the first throttling device 1011, and the downstream of the fourth heat exchanger 804 is in communication with a pipeline between the second valve port 96 and the third heat exchanger 803. For example, a first joint point may be provided in the pipeline between the first valve port 95 and the first throttling device 1011, and a second joint point may be provided in the pipeline between the second valve port 96 and the third heat exchanger 803. The upstream of the third throttle unit 1013 is in communication with the first joint point, and the downstream of the fourth heat exchanger 804 is in communication with the second joint point. In this embodiment, the fourth heat exchanger 804 is a direct cooling plate that may be attached to a battery to cool the battery. The third throttling device 1013 may be an expansion ball valve, which has three states: fully open, throttling, and closed. The flow conditions of the expansion ball valve under different states are as described above, and will not be repeated here.

It should be noted that the fluid management valve 1 in the thermal management system described in this embodiment has the first operating mode, the second operating mode, and the third operating mode described above; that is, the main opening 93 is either in the fully open state or in the closed state, and does not need to have a throttling function.

Different embodiments of the thermal management system of the present disclosure will be described below. For simplicity, the following description primarily details the differences between the embodiments, and similarities will not be repeatedly described. In addition, identical elements in the embodiments of the present disclosure are marked with identical labels, to facilitate comparison of the embodiments.

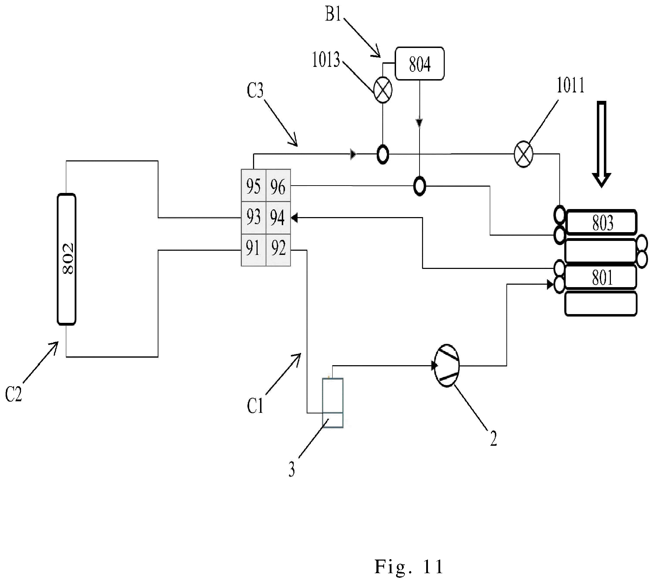

Referring to Fig. 11, a schematic view of connections of a thermal management system according to another embodiment of the present disclosure is shown. The difference between the thermal management system in this embodiment and the thermal management system shown in Fig. 10 lies in that the second throttling device 1012 is omitted in the second fluid circuit C2, and the fluid management valve 1 has four operating modes, first to fourth operating modes. Specifically, the fluid management valve 1 in this embodiment not only has the first operating mode, the second operating mode, and the third operating mode described above, but also the fourth operating mode described above. That is, the main opening 93 of the fluid management valve 1 may be in the fully open state, the closed state and the throttling state. When the main opening 93 is in the throttling state, the main opening 93 has a throttling function, so that the second throttling device 1012 in the second fluid circuit C2 can be omitted.

In order to better understand the present invention, the operating mode of the thermal management system of the present disclosure will be described below with reference to the drawings. It should be noted that the connection relationship of the thermal management system shown in Fig. 11 is substantially the same as in Fig. 10, except that the function of the second throttling device 1012 in Fig. 10 is incorporated into the main opening 93 of the fluid management valve 1. Therefore, the thermal management systems shown in Figs. 10 and 11 have the same operating modes. For simplicity, the operating modes of the thermal management system shown in Fig. 11 will be described below. In addition, for ease of comparison, the refrigerant circuit in each operating mode will be described below with the compressor as a starting point.

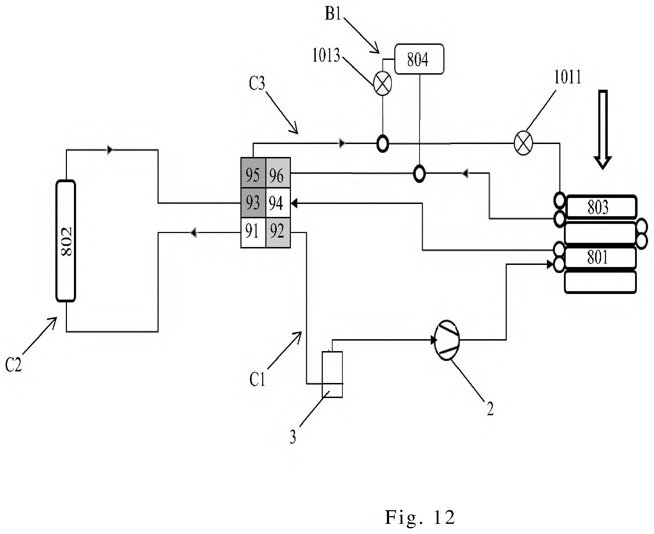

Referring to Fig. 12, an AC mode (also referred to as a cabin cooling mode) of the thermal management system is shown. In this mode, the fluid management valve 1 of the thermal management system is in the first operating mode (that is, the third valve port 94 is in communication with the fourth valve port 91; the main opening 93 (in the fully open state) is in communication with the first valve port 95; the second valve port 96 is in communication with the fifth valve port 92), and the air entering the cabin can be cooled through the third heat exchanger 803 (evaporator), thereby achieving cabin cooling.

Specifically, in the first fluid circuit C1, the high-temperature, high-pressure gaseous refrigerant compressed by the compressor 2 sequentially flows through the first heat exchanger 801 (built-in condenser), and the third valve port 94 and the fourth valve port 91 of the fluid management valve 1 to reach the second fluid circuit C2, wherein the first heat exchanger 801 does not perform heat exchange; it is only used for fluid communication. The refrigerant is then condensed into a liquid state via the second heat exchanger 802 (evaporative condenser) in the second fluid circuit C2 and reaches the third fluid circuit C3 through the main opening 93 and the first valve port 95 of the fluid management valve 1. Next, the refrigerant passes through the first throttling device 1011 of the third fluid circuit C3, is throttled and depressurized by the first throttling device 1011, and then enters the third heat exchanger 803 (evaporator). The refrigerant evaporates and absorbs heat at the third heat exchanger 803 to cool the air flowing through the third heat exchanger 803 in the surrounding environment (as indicated by the hollow arrow in the figure), and the cooled air enters the cabin, thereby achieving cabin cooling. In addition, most of the refrigerant flowing through the third heat exchanger 803 is converted to a gaseous state. The refrigerant continues to flow through the second valve port 96 and the fifth valve port 92 of the fluid management valve 1, returning to the gas-liquid separator 3 of the first fluid circuit C1. The liquid refrigerant is stored in the gas-liquid separator 3, the gaseous refrigerant enters the suction port of the compressor 2 and is compressed into a high-temperature, high-pressure gaseous refrigerant, thereby completing a complete cycle of the refrigerant circuit in this mode.

In the AC mode, the battery cooling function may also be selectively enabled. Specifically, the third throttling device 1013 in the first branch B1 is enabled, so that some of the refrigerant flows through the third throttling device 1013, is then throttled and depressurized, and enters the fourth heat exchanger 804 (direct cooling plate) to evaporate and absorb heat, thereby cooling the battery.

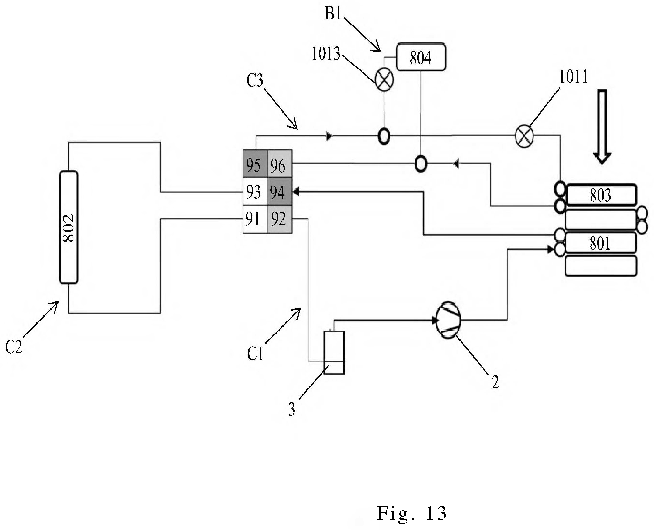

Referring to Fig. 13, a self-circulation mode of the thermal management system is shown. The self-circulation mode is an intermediate transition mode between the AC mode and a heat pump mode. When the thermal management system switches from the AC mode to the heat pump mode, the refrigerant in the second fluid circuit C2 is reversed to a reverse flow direction, i.e., direct fluid reversal. This may cause the fluid management valve 1 to fail to switch normally between different operating modes. To solve this defect, a self-circulation mode is added to the thermal management system of the present disclosure, which can make the refrigerant in the second circuit C2 be in a suspended state before the thermal management system switches to the heat pump mode, thereby avoiding the problem that the fluid management valve 1 cannot switch normally due to direct fluid reversal.

In the self-circulation mode, the fluid management valve 1 of the thermal management system is in the second operating mode (that is, the third valve port 94 is in communication with the first valve port 95; the second valve port 96 is in communication with the fifth valve port 92; and the main opening 93 is not in communication with the fourth valve port 91), so that the refrigerant in the second circuit C2 is in the suspended state.

Specifically, in the first fluid circuit C1, the high-temperature, high-pressure gaseous refrigerant compressed by compressor 2 sequentially flows through the first heat exchanger 801 (built-in condenser), and the third valve port 94 and the first valve port 95 of the fluid management valve 1 to reach the third fluid circuit C3. The refrigerant then passes through the first throttling device 1011 of the third fluid circuit C3, and the third heat exchanger 803 (evaporator) to reach the fluid management valve 1, returns to the gas-liquid separator 3 of the first fluid circuit C1 via the second valve port 96 and the fifth valve port 92, and flows into the compressor 2. As can be seen, in this mode, the refrigerant does not pass through the second fluid circuit C2, that is, the refrigerant in the second circuit C2 is in the suspended state. In addition, it should be noted that since the self-circulation mode is the intermediate transition mode between the AC mode and the heat pump mode, in this mode, the first throttling device 1011 may be in the fully open state, and the first heat exchanger 801 and the second heat exchanger 802 may only provide a fluid communication function without cooling or heating the surrounding environment.

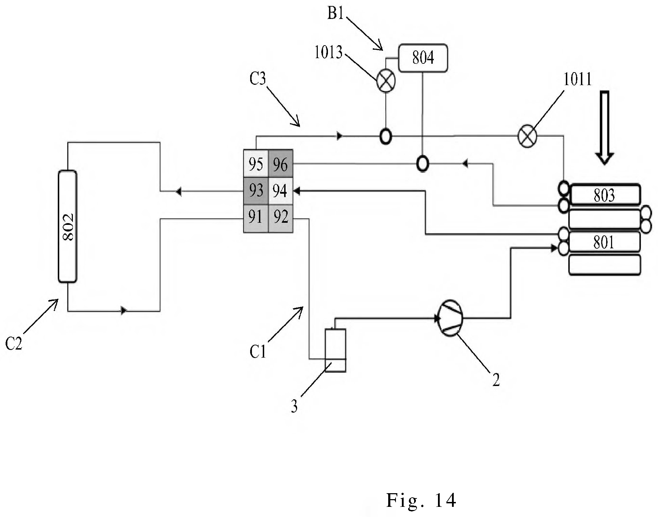

Referring to Fig. 14, a dehumidification mode of the thermal management system is shown. The principle of dehumidification is to cool the air through the evaporator (i.e. third heat exchanger 803) and reduce its temperature to below the dew point temperature, so that the water vapor condenses into small water droplets and separates from the air, thereby achieving the effect of dehumidification. It can be seen that the dehumidification mode requires cooling of the air entering the cabin.

When the ambient temperature is low, if the dehumidified air is circulated directly into the cabin, it will cause the cabin temperature to further decrease, resulting in discomfort for the occupants. To avoid this problem, a damper of the first heat exchanger 801 (built-in condenser) may be opened so that the dehumidified air is heated by the first heat exchanger 801 and then recirculated into the cabin. In this case, the fluid management valve 1 of the thermal management system is in the third operating mode, that is, the fourth valve port 91 is in communication with the fifth valve port 92; the main opening 93 is in communication with the second valve port 96; and the third valve port 94 is in communication with the first valve port 95.

Specifically, with reference to Fig. 14, in the first fluid circuit C1, the high-temperature, high-pressure gaseous refrigerant compressed by compressor 2 enters the first heat exchanger 801 (built-in condenser), and condenses, releasing heat to heat the air in the surrounding environment that has flowed through the third heat exchanger 803, namely, heating the dehumidified air, and the heated air is then circulated into the cabin, thereby avoiding the problem that the cabin temperature further decreases due to dehumidification when the ambient temperature is low, resulting in discomfort for the occupants. In addition, the refrigerant flowing through the first heat exchanger 801 is condensed into a liquid state and reaches the third fluid circuit C3 through the third valve port 94 and the first valve port 95 of the fluid management valve 1. Then, the refrigerant passes through the first throttling device 1011 of the third fluid circuit C3, is throttled and depressurized by the first throttling device 101 and then enters the third heat exchanger 803 (evaporator). The refrigerant evaporates and absorbs heat at the third heat exchanger 803, to cool the air in the surrounding environment that has flowed through the third heat exchanger 803 to below the dew point, thereby achieving the effect of dehumidification. In addition, most of the refrigerant flowing through the third heat exchanger 803 is converted to a gaseous state and continues to reach the second fluid circuit C2 through the second valve port 96 and the main opening 93 of the fluid management valve 1. Then, the refrigerant flows through the second heat exchanger 802 of the second fluid circuit C2 (at this time, the second heat exchanger 802 is only used for fluid communication), and returns to the gas-liquid separator 3 of the first fluid circuit C1 through the fourth valve port 91 and the fifth valve port 92 of the fluid management valve 1. The liquid refrigerant is stored in the gas-liquid separator 3, and the gaseous refrigerant enters the suction port of the compressor 2 and is compressed into a high-temperature, high-pressure gaseous refrigerant, thereby completing a complete cycle of the refrigerant circuit in this mode. For the surrounding environment, along the flow direction of air, the air flows through the third heat exchanger 803 for cooling and dehumidification, and then through the first heat exchanger 801 for heating. The heated air is circulated into the cabin.

When the ambient temperature is high, the dehumidified air may be circulated directly into the cabin to cool the cabin, which is the AC mode described above, and is not repeated here. That is, the AC mode inherently has a dehumidification function.

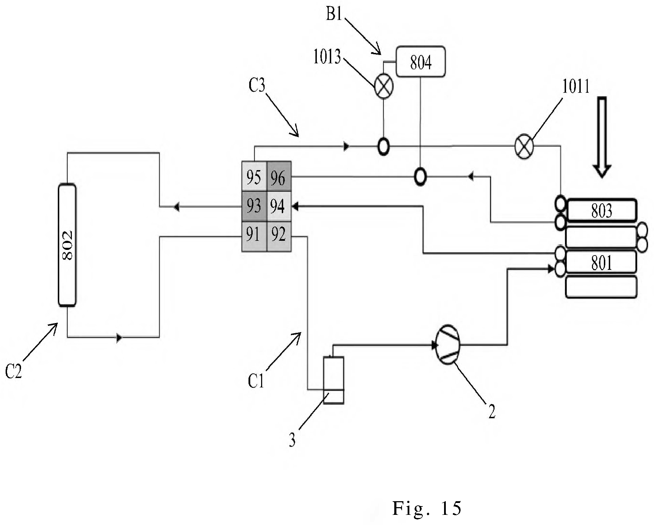

Referring to Fig. 15, a heat pump mode of the thermal management system is shown. The heat pump mode is used to heat the cabin. In this mode, the fluid management valve 1 of the thermal management system is in the fourth operating mode (that is, the second valve port 96 is in communication with the main opening 93, the main opening 93 is in the throttling state, the third valve port 94 is in communication with the first valve port 95, and the fourth valve port 91 is in communication with the fifth valve port 92), and the air entering the cabin can be heated by the first heat exchanger 801 (built-in condenser), thereby achieving the heating of the cabin.

Specifically, in the first fluid circuit C1, the high-temperature, high-pressure gaseous refrigerant compressed by the compressor 2 enters the first heat exchanger 801 (built-in condenser), and then condenses, releasing heat to heat the air in the surrounding environment that has flowed through the third heat exchanger 803, and the heated air is circulated into the cabin, thereby achieving the heating of the cabin. In addition, the refrigerant flowing through the first heat exchanger 801 is partially condensed into a liquid state, reaches the third fluid circuit C3 through the third valve port 94 and the first valve port 95 of the fluid management valve 1, and flows through the first throttling device 1011 (at this time, the first throttling device 1011 is in the fully open state, only providing a fluid communication function without throttling or depressurizing the refrigerant) and the third heat exchanger 803 in the third fluid circuit C3. It should be noted that the temperature of the refrigerant flowing out from the first heat exchanger 801 is higher than the temperature of the third heat exchanger 803 and the refrigerant is not throttled or depressurized by the first throttling device 1011 before entering the third heat exchanger 803. Therefore, when the refrigerant at the higher temperature flows through the third heat exchanger 803, it will exchange heat with the air in the surrounding environment, thereby preheating the air entering the cabin. In addition, the refrigerant flowing through the third heat exchanger 803 releases heat, and passes through the second valve port 96 and the main opening 93 of the fluid management valve 1 (at this time, the main opening 93 is in the throttling state), wherein the refrigerant is throttled and depressurized after passing through the main opening 93, and the throttled and depressurized refrigerant reaches the second fluid circuit C2, and evaporates and absorbs heat via the second heat exchanger 802, so that most of the refrigerant is converted to a gaseous state. The refrigerant continues to flow through the fourth valve port 91 and the fifth valve port 92 of the fluid management valve 1, and returns to thegas-liquid separator 3 in the first fluid circuit C1. The liquid refrigerant is stored in the gas-liquid separator 3, and the gaseous refrigerant enters the suction port of the compressor 2, and is compressed into a high-temperature and high-pressure gaseous refrigerant, thereby completing a complete cycle of the refrigerant circuit in this mode. For the surrounding environment, along the flow direction of the air, the air flows through the third heat exchanger 803 for preheating, and then through the first heat exchanger 801 for heating. The heated air is circulated into the cabin, thereby achieving the heating of the cabin.

In the heat pump mode, a battery heating function may also be selectively enabled. Specifically, the third throttling device 1013 in the first branch B1 is enabled, so that a part of the refrigerant flowing from the first valve port 95 flows through the third throttling device 1013 (at this time, the third throttling device 1013 is in the fully open state, only providing a fluid communication function without throttling or depressurizing the refrigerant) and the fourth heat exchanger 804. It should be noted that the temperature of the refrigerant flowing out from the first heat exchanger 801 is higher than the temperature of the fourth heat exchanger 804, and the refrigerant is not throttled or depressurized by the third throttling device 1013 before entering the fourth heat exchanger 804. Therefore, when the refrigerant at the higher temperature from the first valve port 95 flows through the fourth heat exchanger 804, it will perform heat exchange, thereby heating the battery.

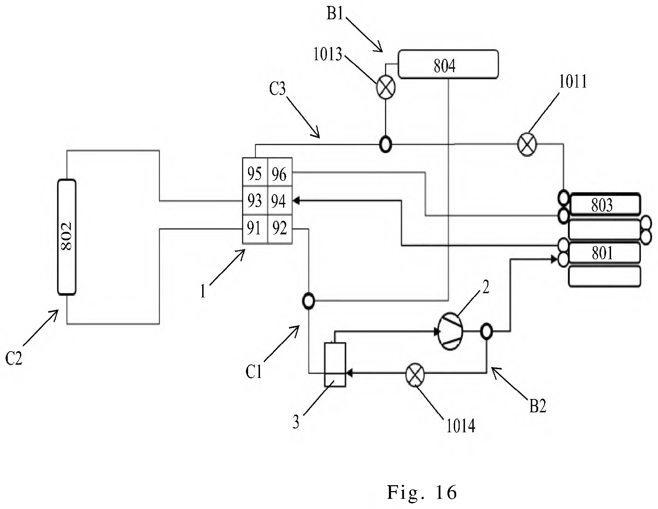

Referring to Fig. 16, a schematic view of connections of a thermal management system according to another embodiment of the present disclosure is shown. The difference between the thermal management system in this embodiment and the thermal management system shown in Fig. 11 is that: the connection position of the first branch B1 is different. Specifically, the first branch B1 is sequentially provided with a third throttling device 1013 and a fourth heat exchanger 804 along the flow direction of fluid, wherein the upstream of the third throttling device 1013 is in communication with a pipeline between the first valve port 95 and the first throttling device 1011, and the downstream of the fourth heat exchanger 804 is in communication with a pipeline between the fifth valve port 92 and the gas-liquid separator 3. For example, a first joint point may be provided in the pipeline between the first valve port 95 and the first throttling device 1011, a second joint point may be provided in the pipeline between the fifth valve port 92 and the gas-liquid separator 3, the upstream of the third throttling device 1013 is in communication with the first joint point, and the downstream of the fourth heat exchanger 804 is in communication with the second joint point.

In this embodiment, the fourth heat exchanger 804 may be a battery cooler to cool the battery. The third throttling device 1013 may be an expansion ball valve, which has three states: fully open, throttling, and closed. The flow conditions of the expansion ball valve under different states are as described above, and will not be repeated here.

Preferably, the thermal management system may further include a second branch B2. A fourth throttling device 1014 is provided on the second branch B2, the upstream of the fourth throttling device 1014 is in communication with a pipeline between the compressor 2 and the first heat exchanger 801, and the downstream of the fourth throttling device 1014 is in communication with the inlet of the gas-liquid separator 3. For example, a third joint point may be provided in the pipeline between the outlet port of the compressor 2 and the first heat exchanger 801, the upstream of the fourth throttling device 1014 is in communication with the third joint point, and the downstream thereof is in communication with the inlet of the gas-liquid separator 3.

The operating modes of the thermal management systems described in this embodiment will be described below with reference to the drawings. In addition to the AC mode, the self-circulation mode, the dehumidification mode, and the heat pump mode described above, the thermal management system of this embodiment has a triangular circulation mode. When the efficiency of the heat pump is low due to a low ambient temperature, the triangular circulation mode may be selectively enabled. The triangular circulation mode is to use a compressor to perform work on the refrigerant, convert electrical energy into thermal energy and transfer the thermal energy to the cabin through the first heat exchanger 801 (built-in condenser), so as to achieve the heating of the cabin in the low-temperature environment. In this mode, the fluid management valve 1 of the thermal management system is in the second operating mode, that is, the third valve port 94 is in communication with the first valve port 95, the second valve port 96 is in communication with the fifth valve port 92, and the main opening 93 is not in communication with the fourth valve port 91; furthermore, the first throttling device 1011 is in the closed state.

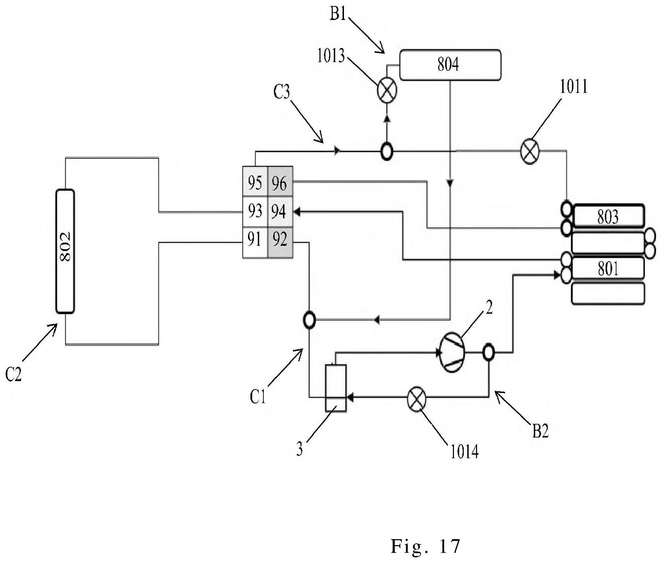

Specifically, referring to Fig. 17, the refrigerant is compressed by the compressor 2 (that is, the compressor 2 performs work on the refrigerant to convert electrical energy into thermal energy) into a high-temperature, high-pressure gaseous refrigerant. After entering the first heat exchanger 801 (built-in condenser), the refrigerant condenses and releases heat to heat the air in the surrounding environment. The heated air is circulated into the cabin, thereby achieving the heating of the cabin. In addition, the refrigerant flowing through the first heat exchanger 801 is partially condensed into a liquid state, reaches the first branch B1 through the third valve port 94 and the first valve port 95 of the fluid management valve 1, is throttled and depressurized through the third throttling device 1013 in the first branch B1, and then flows through the fourth heat exchanger 804 to evaporate and absorb heat, converting most of the refrigerant into a gaseous state. The refrigerant continues to flow into the gas-liquid separator 3. The liquid refrigerant is stored in the gas-liquid separator 3, and the gaseous refrigerant enters the suction port of compressor 2 and is compressed. This cycle mainly involves the compressor performing work on the refrigerant, converting electrical energy into thermal energy, and then transferring the thermal energy to the cabin through the built-in condenser to achieve the heating of the cabin in the low-temperature environment.

When the gas-liquid separator 3 is no longer able to continue storing the liquid refrigerant in the system (otherwise the liquid refrigerant will be discharged to the suction port of the compressor), the second branch line B2 may be enabled, so that some of the high-temperature, high-pressure gaseous refrigerant discharged from the compressor 2 is throttled and depressurized by passing through the fourth throttling device 1014, and then circulated into the gas-liquid separator 3. The liquid refrigerant in the gas-liquid separator 3 is heated to a gaseous state, which can prevent excessive liquid refrigerant from circulating directly to the compressor, improving the performance of the compressor.

It can be seen that the thermal management system provided in the present disclosure can realize multiple thermal management modes due to the fluid management valve 1 with the above structure included therein, simplifying the pipeline connection and control strategy of the thermal management system, and reducing the overall system cost.

Although the present disclosure has been described with the self-circulation mode as the intermediate transition mode between the AC mode and the heat pump mode, the present disclosure is not limited thereto. For example, the self-circulation mode may also be used as an intermediate transition mode between the AC mode and the dehumidification mode. As long as the flow direction of the refrigerant in the second fluid circuit C2 is reversed for two modes, the self-circulation mode can be used as an intermediate transition mode between the two modes.

In conclusion, the present disclosure provides a fluid management valve and a thermal management system including the fluid management valve. The fluid management valve includes a valve body and a spool that is located in the valve body and can be rotated between different positions relative to the valve body, wherein a valve port and a main opening are provided on the valve body; the spool is provided with a main flow channel including a main body section and a throttling section; by rotating the spool, the main opening is made to correspond to the main body section or the throttling section of the main flow channel, and selectively communicate with the valve port, thereby enabling the fluid management valve to switch between different operating modes and allowing the main opening to adjust the fluid flow, specifically between fully open, throttling and closed states. This design can not only replace the complex structure of multiple shut-off valves and/or three-way valves in the prior art, resulting in simple assembly and low cost, but also make it easy to control, simplify the pipeline structure, and improve product integration. The thermal management system can simplify the pipeline connection and control strategy of the thermal management system and reduce the overall system cost due to the fluid management valve with the above structure included therein, .

The exemplary implementations of the fluid management valve and the thermal management system provided in the present disclosure have been described above with reference to preferred embodiments. However, those skilled in the art will understand that various changes and modifications could be made to the above specific embodiments without departing from the concept of the present disclosure; and various technical features and structures set forth in the present disclosure could be combined in various ways, without exceeding the scope of protection of the present disclosure, which is determined by the appended claims.

## Claims

1. A fluid management valve (1), comprising:
a valve body (10), the valve body (10) having a valve port and a main opening (93); and
a spool (20), the spool (20) having a main flow channel (23); wherein the spool (20) is located within the valve body (10) and has a communicated position and a closed position relative to the valve body (10);
when the spool (20) is located in the communicated position, the main flow channel (23) communicates the valve port with the main opening (93); and
when the spool (20) is located in the closed position, the valve port and the main opening (93) are separated by the spool (20).

2. The fluid management valve (1) according to claim 1, wherein the main flow channel (23) has a main body section (230) and a throttling section (231); the communicated position comprises a fully open position and a throttling position;
when the spool (20) is located in the fully open position, the main body section (230) directly communicates the main opening (93) with the valve port; and
when the spool (20) is located in the throttling position, the throttling section (231) is located between the main opening (93) and the main body section (230) so that the main body section (230) is in communication with the main opening (93) via the throttling section (231).

3. The fluid management valve (1) according to claim 2, wherein the valve port comprises a first valve port (95) and a second valve port (96); the fully open position comprises a first fully open position and a second fully open position;
when the spool (20) is located in the first fully open position, the main opening (93) is in communication with the first valve port (95) through the main body section (230); and
when the spool (20) is located in the second fully open position, the main opening (93) is in communication with the second valve port (96) through the main body section (230).

4. The fluid management valve (1) according to claim 3, wherein the spool (20) further has a central flow channel (21); the valve port further comprises a third valve port (94) and a fourth valve port (91);
when the spool (20) is located in the first fully open position, the third valve port (94) is in communication with the fourth valve port (91) through the central flow channel (21);
when the spool (20) is located in the closed position, the third valve port (94) is in communication with the first valve port (95) through the central flow channel (21);
when the spool (20) is located in the second fully open position, the third valve port (94) is in communication with the first valve port (95) through the central flow channel (21); and
when the spool (20) is located in the throttling position, the third valve port (94) is in communication with the first valve port (95) through the central flow channel (21).

5. The fluid management valve (1) according to claim 4, wherein the central flow channel (21) is defined by an arc-shaped edge portion (210), a first straight edge portion (211) and a second straight edge portion (212) into a sector shape; wherein the third valve port (94) is located at the intersection of the first straight edge portion (211) and the second straight edge portion (212); and
during the movement of the spool (20) relative to the valve body (10), the fourth valve port (91) and the first valve port (95) move along the arc-shaped edge portion (210) relative to the spool (20).

6. The fluid management valve (1) according to claim 4, wherein the spool (20) further has an edge flow channel (22); the valve port further comprises a fifth valve port (92);
when the spool (20) is located in the first fully open position, the fifth valve port (92) is in communication with the second valve port (96) through the edge flow channel (22);
when the spool (20) is located in the closed position, the fifth valve port (92) is in communication with the second valve port (96) through the edge flow channel (22);
when the spool (20) is located in the second fully open position, the fifth valve port (92) is in communication with the fourth valve port (91) through the edge flow channel (22); and
when the spool (20) is located in the throttling position, the fifth valve port (92) is in communication with the fourth valve port (91) through the edge flow channel (22).

7. The fluid management valve (1) according to claim 6, wherein the edge flow channel (22) is an arc-shaped cavity extending along a circumferential direction of the fluid management valve (1).

8. The fluid management valve (1) according to claim 1, wherein the valve body (10) has a top wall (101), a bottom wall (102) and a side wall (103) located between the top wall (101) and the bottom wall (102), the valve port is disposed at the bottom wall (102) and the main opening (93) is disposed at the side wall (103).

9. The fluid management valve (1) according to claim 6, wherein the central flow channel (21) and the edge flow channel (22) are open on a bottom wall (202) of the spool (20).

10. The fluid management valve (1) according to claim 2, wherein the main flow channel (23) has a first flow channel opening (232) formed on a bottom wall (202) of the spool (20); the main flow channel (23) has a second flow channel opening (233) formed on a side wall (203) of the spool (20);
wherein the second flow channel opening (233) comprises a first opening region (2331) for defining the main body section (230) and a second opening region (2332) for defining the throttling section (231);
when the spool (20) is located in the fully open position, the first opening region (2331) at least partially overlaps with the main opening (93); and
when the spool (20) is located in the throttling position, the second opening region (2332) at least partially overlaps with the main opening (93).

11. The fluid management valve (1) according to claim 1, wherein the fluid management valve (1) further comprises a sealing member disposed between the valve body (10) and the spool (20).

12. The fluid management valve (1) according to claim 2, wherein the throttling section (231) is a groove extending from a junction with the main body section (230) in a direction away from the main body section (230).

13. The fluid management valve (1) according to claim 12, wherein the groove gradually narrows in the direction away from the main body section (230).

14. The fluid management valve (1) according to claim 1, wherein the fluid management valve (1) further comprises an actuator (30) connected to the spool (20) to drive the spool (20) to rotate between the communicated position and the closed position.

15. A thermal management system, wherein the thermal management system comprises the fluid management valve (1) according to any one of claims 1-14.
